# EUROPEAN PATENT SPECIFICATION

(11) **EP 2 014 148 B1**
(45) Date of publication and mention of the grant of the patent: **07.09.2011**
(21) Application number: 08156583.0
(22) Date of filing: 20.05.2008
(51) Int. Cl.: A01D 43/063, A01D 43/08, E01H 1/04

(54) **A work machine with an aspiration system of solid materials**
Arbeitsmaschine mit einem Saugsystem für Feststoffe
Machine de travail avec système d'aspiration de matériaux solides

(30) Priority: 11.06.2007 IT RE20070078
(43) Date of publication of application: 14.01.2009
(73) Proprietor: Gianni Ferrari S.r.l., 42046 Reggiolo (Reggio Emilia) (IT)
(72) Inventor: Ferrari, Vando Gianni, 42046 Reggiolo (Reggio Emilia) (IT); Bertazzoni, Giuseppe, 42046 Reggiolo (Reggio Emilia) (IT)
(74) Representative: Corradini, Corrado

(56) References cited:
- WO-A-2007/017658
- DE-A1- 19 539 350
- US-A- 3 461 474
- US-A- 3 958 401
- US-A1- 2006 168 932

## Description

The invention relates to work machines which move on a terrain and which are provided with aspiration systems for collecting solid materials.

In more detail, the invention relates to gardening machines, for example grass mowers and sweeping machines, which are provided with aspiration systems for collecting the just-cut grass, dry leaves and other solid refuse from the terrain or ground.

As is known, the aspiration system of these work machines generally comprises a large collection container located in the posterior part of the machine, to which an aspiration conduit is associated, provided with a motorized impeller which creates an air current flowing from the free end of the aspiration conduit towards the inside of the collection container, and which is able to entrain the solid materials found on the ground.

In order for the air current to be established, the collection container has to be provided with a discharge opening allowing the aspirated air to be discharged. The discharge opening is generally positioned in the upper part of the collection container, i.e. in the zone towards which the air current naturally tends to flow. In this way the aspirated solid materials deposit and accumulate by force of gravity on the bottom of the collection container, while the air exits spontaneously from the discharge opening, passing through a grid which prevents large-but-light materials, for example dry leaves and the like, from exiting to the outside.

However, the air current which functions as a vehicle for the solid materials can also entrain small fragments of earth or other light bodies, which are not sufficiently heavy to deposit inside the collection container, and are therefore expelled internally of the container via the discharge opening.

In this way, the aspiration system tends to raise large quantities of dust from the ground, which remain suspended in the air for a long time, causing considerable discomfort to the operators and other persons who are in proximity of the work machine, before falling back down to earth, dirtying surfaces and surrounding objects.

To overcome this drawback, work machines are known in which the aspiration system is provided with a filtering element for filtering the aspirated air, before the air is newly discharged externally of the collection container. In some cases, the filtering element is constituted by a simple cloth which closes the discharge opening of the collection container. In other cases, the filtering element is constituted by a stellar pleated filter which is generally made of paper or cloth.

The filtering elements are however rather difficult to clean when they get clogged with dust and dirt, such that to wash them it is generally necessary to dismount them from the machine or install complicated and expensive automatic cleaning devices on the machine which eliminate the particles imprisoned in the filtering elements, for example by a shaking action.

A further drawback of these filtering elements is manifested when the work machine is used on a damp or wet terrain. In this circumstance, the filtering system collects a part of the water on the ground, which wets the filter element and mixes with the dust there, forming a mud which can render the filtering element totally unusable and needy of replacement.

US 3 958 401 teaches a work machine that can move on a terrain and is provided with a system for aspirating solid materials and comprises a first container for solid materials. The container is in turn contained inside an outer bag. Between the internal containers and the outer bag a series of vertical bristles is provided, the bristles being able to separate the internal container with respect to the outer bag and are able to guide solid objects relatively big such as leaves and grass scraps into the internal container, while letting air pass through them. However such a configuration of the bristle is not able to retain solid particles, such as dust and dirt, generally present in the air current. These particles in turn will generally collect in the outer bag.

An aim of the present invention is to obviate the above-mentioned drawbacks in the prior art, with of a simple, rational and inexpensive solution.

The aim is attained thanks to the characteristics of the invention as reported in independent claim 1. The dependent claims delineate preferred and/or particularity advantageous aspects of the invention.

In particular, the invention makes available a work machine which moves on the ground, which is provided with a system for aspiration of solid materials of the type mentioned in the preamble, i.e. comprising a collection container for the solid material, means for setting up a forced air current which crosses the collection container, and means for filtering the forced air current at the outlet of the collection container.

According to the present invention, the filter means comprise at least a brush, the bristles of which are arranged such as to be crossed by the air current which exits the collection container, and which are designed to retain the solid particles present in it.

Thanks to this solution, the smallest and lightest particles transported by the air current are imprisoned between the bristles of the brush, and are therefore not projected externally, forming clouds of dust. Further, when the bristles of the brush are full of powder or dirt, they can be cleaned very much more simply and rapidly with respect to the filter elements of the prior art.

In particular, the bristles of the brush are preferably made of a liquid-resistant material which does not absorb the liquids themselves, for example a plastic material such as polypropylene or an appropriate natural fibre, such that if the bristles are fouled with mud or earth the can be rapidly cleaned with high-pressure jets of water.

In a preferred aspect of the invention, the brush is associated to means for cleaning the bristles of the retained material, such as not to require dismounting thereof when the bristles get clogged with powder and dirt.

The means for cleaning the bristles preferably comprise actuator means for moving the bristles such as to cause expulsion and automatic distancing of the powder and the dirt. For example, these actuator means can set the brush in rotation at a sustained pace, such as to subject the bristles to a centrifugal action which projects the material retained thereby away.

Further characteristics and advantages of the invention will become clear from a reading of the following description, provided by way of non-limiting example with the aid of the figures of the drawings, in which:
figure 1 is a lateral view of a work machine of the invention;
figure 2 schematically shows the aspirating system installed on the work machine of figure 1;
figure 3 is a view along section line III-III of figure 1;
figure 4 is a view along section line IV-IV of figure 3;
figure 5 is a lateral view of the work machine of figure 1, shown in a discharge configuration of the aspirated material.

The figures of the drawings illustrate a work machine 1, which schematically comprises a rigid frame 2 on which means for traction are installed, as well as guide means for enabling the machine 1 to move autonomously on the ground. The traction means comprise, in the example, four support wheels 20 associated to a usual actuating engine (not illustrated), while the guide means comprise a steering wheel 21 located internally of a control cabin 22 for an operator.

The work machine 1 is of a multi-function type, in the sense that it is provided with a work tool 3 which can be replaced, in order to enable the work machine to perform different operations on the land.

In the illustrated example, the work tool 3 comprises means for brushing for sweeping asphalted roads or avenues. Alternatively the work tool 3 could be equipped to perform gardening tasks, in particular it could comprise lawn-mowing means for cutting grass.

The work machine 1 is further provided with an aspiration system 4 for collecting solid material from the ground, in particular for the collection of the just-cut grass, dry leaves or refuse.

The aspiration system 4 comprises a collection container 40, installed on the frame 2 of the back part of the work machine 1, in which the solid material aspirated from the ground is collected. An aspirating conduit 41 opens internally of the collection container 40, which conduit 41 develops towards the front part of the work machine 1, such as to position the inlet mouth 42 thereof in proximity of the ground, in a zone immediately behind the work tool 3.

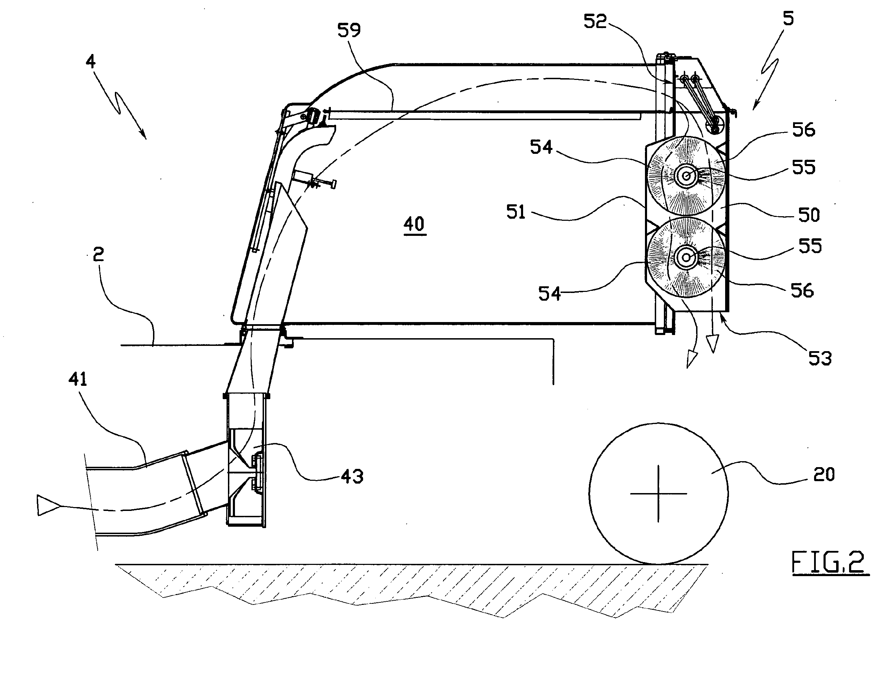

As illustrated in figure 2, along the aspiration conduit 41 a usual motorized impeller 43 is installed, which sets up an air current that runs through the aspirating conduit 41 from the inlet mouth 42 towards the collection container 40.

The air current is sufficiently intense to draw with it the solid materials present on the ground, such as to transport them internally of the collection container 40, where they are deposited on the bottom by effect of gravity.

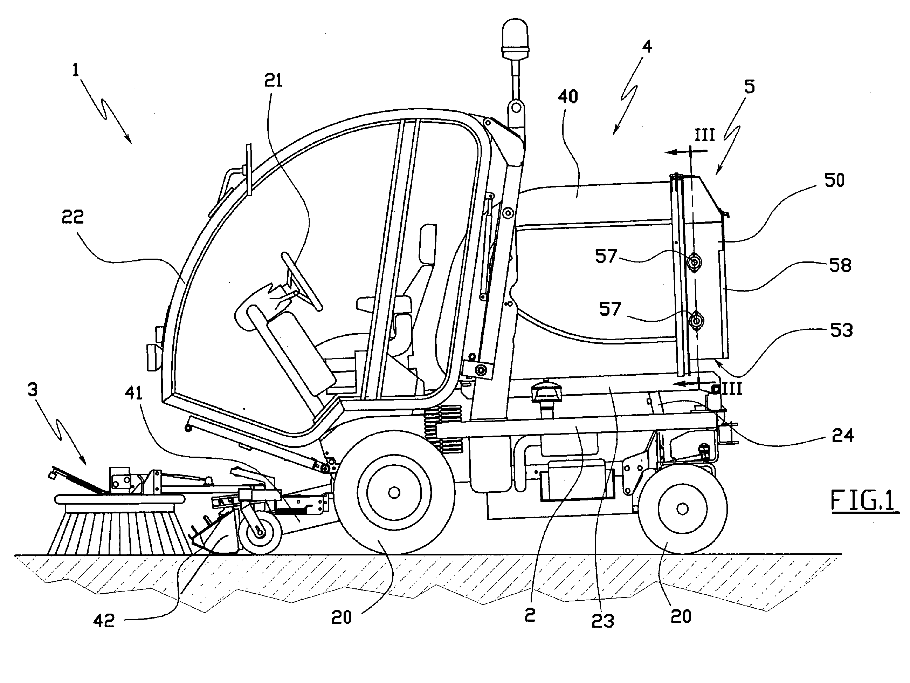

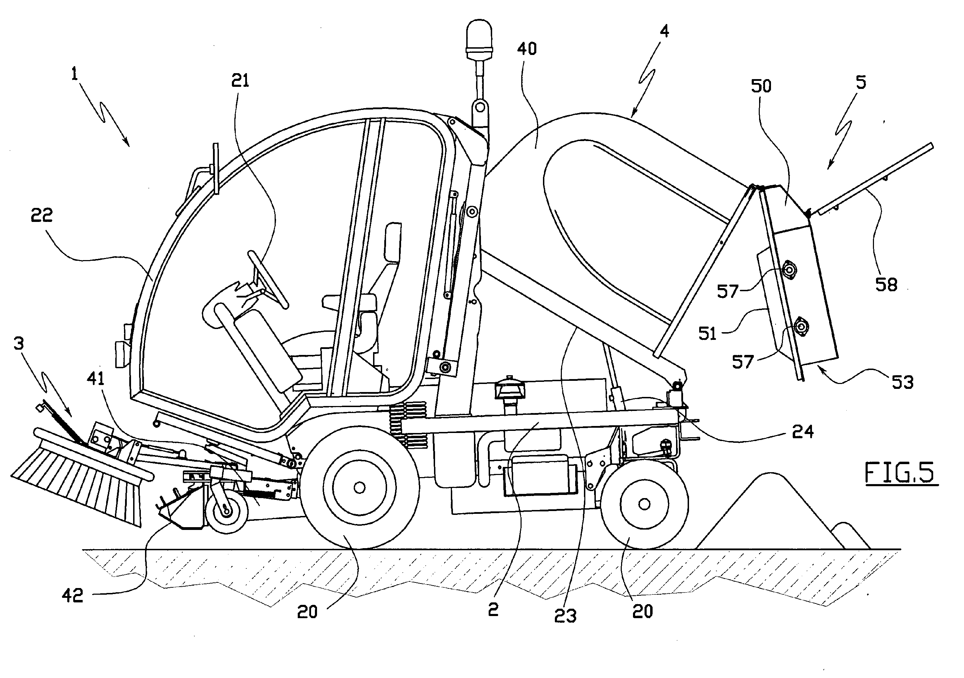

As illustrated in figure 1, the collection container 40 is fixed on a plane 23, which is hinged to the rigid frame 2 at a horizontal rotation axis and is associated to a jack 24, such that it can tilt the collection container 40 to bring it into an inclined position from top to bottom towards the posterior part of the work machine 1 (see figure 5).

The collection container 40 is open on the back flank, where there is a filter group 5 for filtering the aspirated air which tends to exit from the collection container 40.

As illustrated in figure 2, the filter group 5 comprises an auxiliary container 50 provided with a shaped separating wall 51, which completely closes the posterior flank of the collection container 40, in order to separate the internal volume thereof from the internal volume of the auxiliary container 50.

The auxiliary container 50 further comprises a first opening 52, through which it is set in communication with the collection container 40, and a second opening 53, through which it is set in connection with the outside environment. The first opening 52 is afforded in the separating wall 51 at the upper part of the collection container 40, while the second opening 53 is afforded on the bottom of the auxiliary container 50, at a lower height with respect to the first opening 52.

Two substantially cylindrical brushes 54 are installed internally of the auxiliary container 50, each of which comprises a central support shaft 55, about which radially-arranged flexible bristles 56 are fixed.

The flexible bristles 56 preferably have a diameter comprised between 0.15 mm and 1.5 mm and are distributed on the support shaft 55 sufficiently close to and tightly arranged to one another, such as to prevent the passage of dust and other like small bodies.

Further, the bristles 56 are preferably made of a water-resistant material which does not absorb water, for example a plastic material or a suitable natural fibre. For example, excellent results have been obtained using bristles made of polypropylene having a diameter of 0.5 mm or 0.7mm, undulated and inclined at the ends thereof; but excellent results have also been obtained with bristles made of a natural fibre sold under the name of Unionmix.

Cylindrical brushes 54 are installed in the auxiliary container 50 with the relative support shafts 55 horizontally orientated and reciprocally superposed in a vertical direction. Further, the radial size of the flexible bristles 56 and their distribution along the support shafts 55 are such that each of the cylindrical brushes 54 can prevent any direct connection between the first opening 52 and the second opening 53 of the auxiliary container 50.

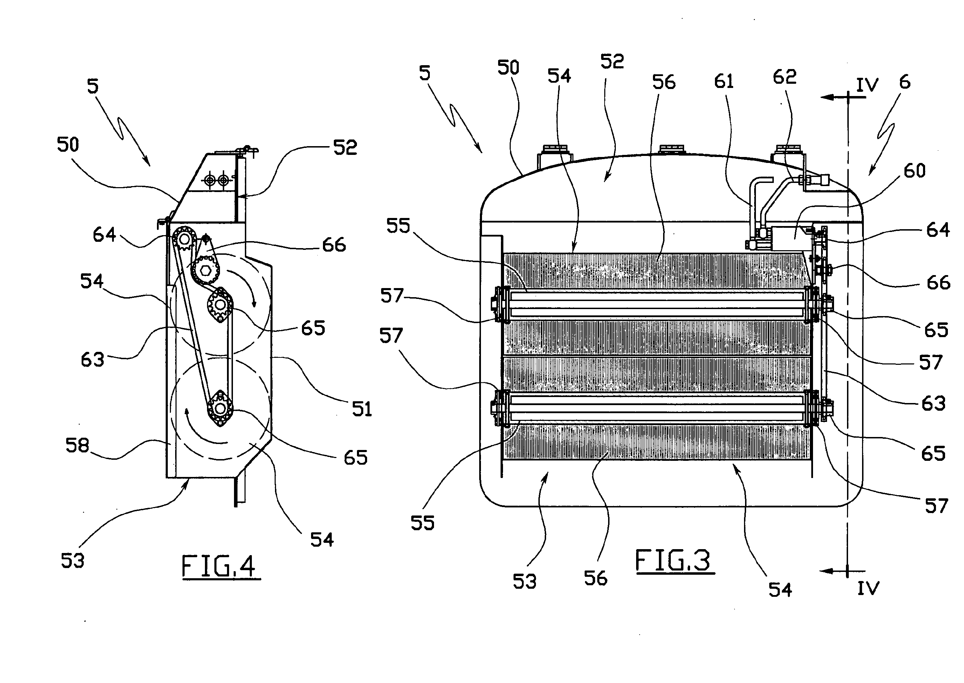

As illustrated in figure 3, the support shafts 55 of the cylindrical brushes 54 are rotatably associated to the auxiliary container 50 by means of respective support bearings 57, which are connected to actuator means 6 which rotate them about the central axis thereof.

The actuator means 6 comprise a hydraulic motor 60, provided with relative inlet conduits 62 and an outlet 62 for the oil, which rotates both the cylindrical brushes 54 via a chain 63 wound on a pinion 64 which is keyed to the shaft of the motor 60, and on two sprockets 65, each of which is keyed to the support shaft 55 of a respective cylindrical brush 54. The actuators 6 further comprise an adjustable chain tensioner 66.

As shown in figure 5, the auxiliary container 50 also functions as a tilting hatch for enabling the collection container 40 to be opened and thus the solid material accumulated therein to be discharged.

In particular, the auxiliary container 50 is hinged in the upper part of the collection container 40, according to a tilting axis which is parallel to the rotation axis of the plane 23 which supports the collection container 40. In this way, when the collection container 40 is tilted backwards by the jack 24, the auxiliary container 50 tends spontaneously to stay vertical, progressively opening the posterior flank of the collection container 40 from which the accumulated solid material can therefore exit.

The auxiliary container 50 is also provided with an openable inspection hatch 58 which enables the inside thereof to be accessed and thus the cylindrical brushes 54, in particular in order to enable cleaning and replacement thereof. During the functioning of the aspiration system 4, the collection container 40 and the auxiliary container 50 are in the closed configuration illustrated in figures 1 and 2, and the cylindrical brushes 54 located in the auxiliary container 50 are kept still.

The motorized impeller 43 induces the above-mentioned forced air current, which rises up the aspirating conduit 41 from the inlet mouth 42 towards the collection container 40, drawing with it the solid materials which are on the ground. During the crossing of the collection container 40, the solid materials deposit on the bottom by force of gravity, while the aspirated air tends to flow spontaneously upwards, exiting from the collection container 40, through the first opening 52 afforded in the auxiliary container 50.

A pre-filtering element 59 is preferably associated to the first opening 52 of the auxiliary container 50 (see figure 2), the pre-filtering element 59 being located in the upper part of the collection container 40, the pre-filtering element 59 being, for example, a metal grid, which can prevent accidental passage of leaves, grass or relatively large solid bodies.

At this point, the air exiting the collection container 40 naturally descends along the auxiliary container 50 from the inlet opening 52 towards the outlet opening 53, crossing the two cylindrical brushes 54 in series.

In this way, the bristles 56 of the cylindrical brushes 54 retain the smallest and lightest particles transported by the air current, such as for example granules of dust, small fragments of earth or other light bodies, which are therefore not projected to the outside.

When an alarm informs the operator that the collection container 40 is full, the work machine 1 is guided into a discharge zone, where the collection container 40 is tilted to empty it of the accumulated solid material, as described herein above.

During this stage the cylindrical brushes 54 can also be cleaned, which during use get full of dust and dirt.

In particular, the cleaning of the cylindrical brushes 54 is done substantially automatically, preferably at each tilting of the collection container 40, setting the actuator means 6 in function such that they rotate the brushes 54 about the axis thereof at a rather high speed. In this way, the bristles 56 of the cylindrical brushes 54 are subjected to a strong centrifugal action which automatically expels the dust particles imprisoned therein, projecting them towards the outside.

Should the cylindrical brushes 54 be fouled with mud or earth, for example because the machine 1 has been used on a damp or wet terrain, the brushes 56 can be effectively cleaned by opening the inspection hatch 58 of the auxiliary container 50, and washing them perhaps using high-pressure water jets, without there being any danger of damaging them.

Obviously an expert in the field might bring numerous modifications of a technical-applicational nature to the above-described work machine 1, without its forsaking the ambit of protection sought in the claims as claimed herein below.

## Claims

1. A work machine able to move on a terrain and being provided with a system (4) for aspirating solid materials, which system comprises a collection container (40) of the solid materials, means for aspirating for setting up a forced air current which crosses the collection container (40), and means for filtering (5) which filter the air current at an outlet of the collection container (40), wherein the means for filtering (5) comprise at least a brush (54), bristles (56) of which are arranged such as to be crossed by the air current exiting the collection container (40), **characterised in that** said means are designed collectively to retain solid particles present therein.

2. The machine of claim 1, **characterised in that** the at least a brush (54) is associated to means (6) for cleaning the bristles (56) of the solid particles retained therein.

3. The machine of claim 2, **characterised in that** the means for cleaning the bristles comprise actuator means for moving the bristles (56), such as to expel the solid particles retained therein.

4. The machine of claim 3, **characterised in that** the actuator means set the brush (54) in rotation, such as to subject the bristles (56) to a centrifugal action.

5. The machine of claim 1, **characterised in that** the brush (54) comprises a central support shaft (55) about which the bristles are fixed (56).

6. The machine of claim 5, **characterised in that** the central support shaft (55) is associated to actuator means which rotate the central support shaft (55) about an axis thereof.

7. The machine of claim 1, **characterised in that** the brush (54) is housed internally of an auxiliary container (50), which is provided with an inlet (52) located in communication with the collection container (40) and an outlet (53) located in communication with an outside environment, such that the auxiliary container (50) can be crossed by the air current exiting the collection container (40).

8. The machine of claim 7, **characterised in that** the inlet (52) is located at an upper part of the collection container (40), at a higher level with respect to the outlet (53).

9. The machine of claim 7, **characterised in that** the auxiliary container (50) defines an openable hatch of the collection container (40).

10. The machine of claim 9, **characterised in that** the collection container (40) is tiltable, and **in that** the auxiliary container (50) is associated to the collection container (40) such as to be spontaneously openable following a tilting of the collection container (40).

11. The machine of claim 7, **characterised in that** the auxiliary container (50) comprises an openable inspection hatch (58) which renders the brush (54) accessible.

12. The machine of claim 1, **characterised in that** the bristles (56) of the brush (54) are made of a material that is resistant to liquids.

13. The machine of claim 1, **characterised in that** the bristles (56) of the brush (54) are made of a material which does not absorb liquids.

14. The machine of claim 1, **characterised in that** the means for filtering (5) comprise two of the bristles (54), which are arranged such as to be crossed in series by the air current exiting the collection container (40).

15. The machine of claim 1, **characterised in that** it comprises means for mowing grass.

16. The machine of claim 1, **characterised in that** it comprises means (3) for sweeping terrain.

17. The machine of claim 1, **characterised in that** it comprises means for traction for enabling the machine to move autonomously over the terrain.

## Patentansprüche

1. Arbeitsmaschine, die in der Lage ist, sich auf dem Boden zu bewegen und mit einem System (4) zum Ansaugen von Feststoffen versehen ist, wobei das System einen Sammelbehälter (40) für die Feststoffe, Ansaugmittel für das Aufbauen eines Druckluftstroms, der den Sammelbehälter (40) durchquert, und Filtermittel (5) umfasst, die den Luftstrom an einem Auslass des Sammelbehälters (40) filtern, wobei die Filtermittel (5) mindestens eine Bürste (54) umfassen, deren Borsten (56) so angeordnet sind, dass sie von dem den Sammelbehälter (40) verlassenden Luftstrom durchquert werden, **dadurch gekennzeichnet, dass** die Mittel insgesamt entsprechend konzipiert sind, um die darin befindlichen Feststoffen zurückzuhalten.

2. Maschine nach Anspruch 1, **dadurch gekennzeichnet, dass** mindestens eine Bürste (54) Mitteln (6) zum Reinigen der Borsten (56) von den darin zurückgehaltenen Feststoffen zugeordnet ist.

3. Maschine nach Anspruch 2, **dadurch gekennzeichnet, dass** die Mittel zum Reinigen der Borsten (56) Betätigungsmittel zum Bewegen der Borsten (56) umfassen, um die darin zurückgehaltenen Feststoffe auszustoßen.

4. Maschine nach Anspruch 3, **dadurch gekennzeichnet, dass** die Betätigungsmittel die Bürste (54) in Drehung versetzen, so dass die Borsten (56) einer Zentrifugalkraft ausgesetzt werden.

5. Maschine nach Anspruch 1, **dadurch gekennzeichnet, dass** die Bürste (54) eine mittlere Trägerwelle (55) umfasst, um die herum die Borsten (56) befestigt sind.

6. Maschine nach Anspruch 5, **dadurch gekennzeichnet, dass** die mittlere Trägerwelle (55) Betätigungsmitteln zugeordnet ist, die die mittlere Trägerwelle (55) um ihre Achse drehen.

7. Maschine nach Anspruch 1, **dadurch gekennzeichnet, dass** die Bürste (54) im Innern eines Zusatzbehälters (50) untergebracht ist, der mit einem Einlass (52) versehen ist, der in Verbindung mit dem Sammelbehälter (40) angeordnet ist, und mit einem Auslass (53), der in Verbindung mit einer Außenumgebung angeordnet ist, so dass der Zusatzbehälter (50) von dem Luftstrom durchquert werden kann, der den Sammelbehälter (40) verlässt.

8. Maschine nach Anspruch 7, **dadurch gekennzeichnet, dass** der Einlass (52) in einem oberen Teil des Sammelbehälters (40), auf einer höheren Ebene als der Auslass (53) untergebracht ist.

9. Maschine nach Anspruch 7, **dadurch gekennzeichnet, dass** der Zusatzbehälter (50) eine zu öffnende Klappe des Sammelbehälters (40) definiert.

10. Maschine nach Anspruch 9, **dadurch gekennzeichnet, dass** der Sammelbehälter (40) kippbar ist und der Zusatzbehälter (50) dem Sammelbehälter (40) so zugeordnet ist, dass er sich nach dem Kippen des Sammelbehälters (40) von selbst öffnet.

11. Maschine nach Anspruch 7, **dadurch gekennzeichnet, dass** der Zusatzbehälter (50) eine zu öffnende Inspektionsluke (56) umfasst, durch die die Bürste (54) zugänglich ist.

12. Maschine gemäß Anspruch 1, **dadurch gekennzeichnet, dass** die Borsten (56) der Bürste (54) aus einem flüssigkeitsbeständigen Material hergestellt sind.

13. Maschine gemäß Anspruch 1, **dadurch gekennzeichnet, dass** die Borsten (56) der Bürste (54) aus einem nicht flüssigkeitsabsorbierenden Material hergestellt sind.

14. Maschine nach Anspruch 1, **dadurch gekennzeichnet, dass** die Filtermittel (5) zwei Bürsten (54) umfassen, die so angeordnet sind, dass sie hintereinander von dem Luftstrom durchquert werden, der den Sammelbehälter (40) verlässt.

15. Maschine nach Anspruch 1, **dadurch gekennzeichnet, dass** sie Mittel zum Mähen von Gras umfasst.

16. Maschine nach Anspruch 1, **dadurch gekennzeichnet, dass** sie Mittel (3) zum Kehren des Bodens umfasst.

17. Maschine nach Anspruch 1, **dadurch gekennzeichnet, dass** sie Zugmittel umfasst, damit die Maschine sich selbstständig über den Boden bewegen kann.

## Revendications

1. Machine de travail capable de se déplacer sur un terrain et étant munie d'un système (4) pour aspirer les matières solides, lequel système comprend un récipient de collecte (40) des matières solides, des moyens d'aspiration pour mettre en place un courant d'air forcé qui traverse le récipient de collecte (40), et des moyens de filtration (5) qui filtrent le courant d'air à une sortie du récipient de collecte (40), où les moyens de filtration (5) comprennent au moins une brosse (54), dont les poils (56) sont disposés de manière à être traversés par le courant d'air sortant du récipient de collecte (40), **caractérisée en ce que** lesdits moyens sont conçus collectivement afin de retenir les particules solides présentes dans ceux-ci.

2. Machine de la revendication 1, **caractérisée en ce que** la ou les brosses (54) sont associées à des moyens (6) pour nettoyer les poils (56) des particules solides retenues dans ceux-ci.

3. Machine de la revendication 2, **caractérisée en ce que** les moyens pour nettoyer les poils comprennent des moyens d'actionnement pour déplacer les poils (56), de telle manière à expulser les particules solides retenues dans ceux-ci.

4. Machine de la revendication 3, **caractérisée en ce que** les moyens d'actionnement mettent la brosse (54) en rotation, de telle manière à soumettre les poils (56) à une action centrifuge.

5. Machine de la revendication 1, **caractérisée en ce que** la brosse (54) comprend un arbre d'appui central (55) autour duquel les poils sont fixés (56).

6. Machine de la revendication 5, **caractérisée en ce que** l'arbre d'appui central (55) est associé à des moyens d'actionnement qui pivotent l'arbre d'appui central (55) autour d'un axe de celui-ci.

7. Machine de la revendication 1, **caractérisée en ce que** la brosse (54) est logée à l'intérieur d'un récipient auxiliaire (50), qui est muni d'une entrée (52) située en communication avec le récipient de collecte (40) et d'une sortie (53) située communication avec un environnement extérieur, de telle manière à ce que le récipient auxiliaire (50) puisse être traversé par le courant d'air sortant du récipient de collecte (40).

8. Machine de la revendication 7, **caractérisée en ce que** l'entrée (52) est située en correspondance à une partie supérieure du récipient de collecte (40), à un niveau supérieur par rapport à la sortie (53).

9. Machine de la revendication 7, **caractérisée en ce que** le récipient auxiliaire (50) définit une trappe ouvrable du récipient de collecte (40).

10. Machine de la revendication 9, **caractérisée en ce que** le récipient de collecte (40) est inclinable, et **en ce que** le récipient auxiliaire (50) est associé au récipient de collecte (40) de telle manière à être spontanément ouvrable suite à une inclinaison du récipient de collecte (40).

11. Machine de la revendication 7, **caractérisée en ce que** le récipient auxiliaire (50) comprend une trappe d'inspection ouvrable (58) qui rend la brosse (54) accessible.

12. Machine de la revendication 1, **caractérisée en ce que** les poils (56) de la brosse (54) sont faits d'une matière résistante aux liquides.

13. Machine de la revendication 1, **caractérisée en ce que** les poils (56) de la brosse (54) sont faits d'une matière qui n'absorbe pas les liquides.

14. Machine de la revendication 1, **caractérisée en ce que** les moyens de filtration (5) comprennent deux des poils (54), qui sont disposés de telle manière à être traversés en série par le courant d'air sortant du récipient de collecte (40).

15. Machine de la revendication 1, **caractérisée en ce qu'**elle comprend des moyens pour tondre l'herbe.

16. Machine de la revendication 1, **caractérisée en ce qu'**elle comprend des moyens (3) pour balayer le terrain.

17. Machine de la revendication 1, **caractérisée en ce qu'**elle comprend des moyens de traction pour permettre à la machine de se déplacer de manière autonome sur le terrain.
